# EUROPÄISCHE PATENTANMELDUNG

(11) **EP 3 982 521 A1**
(43) Veröffentlichungstag der Anmeldung: **13.04.2022**
(21) Anmeldenummer: 20213054.8
(22) Anmeldetag: 10.12.2020
(51) Int. Cl.: H02K 11/40, H02K 5/124, H02K 7/00, B60K 1/00, H01R 39/12, H01R 39/34, H02K 5/10, H05F 3/04, H02K 15/16

(54) **ANORDNUNG ZUR ERDUNG EINER WELLE FÜR EIN GETRIEBE, FÜR EINE ELEKTRISCHE MASCHINE, ODER FÜR EINE ELEKTRISCHE ACHSANTRIEBS-EINHEIT**

(30) Priorität: 06.10.2020 DE 102020212588
(71) Anmelder: ZF Friedrichshafen AG, 88046 Friedrichshafen (DE)
(72) Erfinder: Griesbach, Michael, 88085 Langenargen (DE); Müller, Thorsten, 88048 Friedrichshafen (DE)

(57) **Zusammenfassung**

Anordnung zur Erdung einer aus einem Gehäuse (GH) hervorragenden Welle (W), wobei zur Erdung der Welle (W) gegenüber dem Gehäuse (GH) eine Wellenerdungseinrichtung (E) mit einem Kontaktelement (EK) und einem damit verbundenen Anbindungselement (EA) vorgesehen ist, wobei das Kontaktelement (EK) dazu eingerichtet ist einen elektrisch leitfähigen Schleifkontakt (SK) zur Welle (W) oder zu einer darauf aufgebrachten Hülse (H) herzustellen, wobei das Anbindungselement (EA) einen mechanischen und/oder elektrisch leitfähigen Kontakt zum Gehäuses (GH) herstellt, wobei sich Anbindungselement (EA) in radialer Richtung außerhalb des Kontaktelements (EK) erstreckt, wobei eine Dichtung (DA) zwischen dem Anbindungselement (EA) und dem Gehäuse (GH) vorgesehen ist, um den Schleifkontakt (SK) vor Verunreinigungen zu schützen; sowie Getriebe (G) oder elektrische Achsantriebs-Einheit (EX) für ein Kraftfahrzeug mit einer solchen Anordnung; sowie elektrische Maschine (EM2) mit einer solchen Anordnung.

## Beschreibung

Die Erfindung betrifft eine Anordnung zur Erdung einer aus einem Gehäuse hervorragenden Welle. Die Erfindung betrifft ferner ein Getriebe für ein Kraftfahrzeug mit einer solchen Anordnung, sowie eine elektrische Achsantriebs-Einheit für ein Kraftfahrzeug mit einer solchen Anordnung, sowie eine elektrische Maschine mit einer solchen Anordnung.

In der Veröffentlichung WO 2006/115600 A1 ist ein Zusammenbau eines Wellenerdungsbürstenrings beschrieben. Dieser weist eine Schale auf, welcher die Bürsten aufnimmt. Die Schale mit den daran angeordneten Bürsten umgibt eine Motorwelle, und ist an einer Motorplatte befestigt. Die Befestigung der Schale erfolgt beispielsweise über eine Klammer, welche an die Motorplatte geschraubt ist. Um die Bürsten zu schützen ist ein ringförmiges Schild vorgesehen, welches die Bürsten abdeckt.

Ein derartiger Schutz der Bürsten ist zur Gewährleistung einer dauerhaften Erdungsfunktion wesentlich, wenn eine Abkapselung der zu erdenden Welle nicht möglich ist. Eine solche Abkapselung ist beispielsweise in der JP 2000244180 A2 dargestellt. Soll an die zu erdende Welle jedoch eine weitere Welle anschließbar sein, so ist eine Abkapselung der Wellenerdung nicht ohne Weiteres umsetzbar.

Es ist Aufgabe der Erfindung eine Anordnung zur Erdung einer Welle bereitzustellen, welche nicht durch ein zusätzliches Gehäuse abgekapselt werden kann, sodass ein Schutz des schleifenden Erdungskontakts vor Umwelteinflüssen verbessert wird.

Die Aufgabe wird gelöst durch die Merkmale des Patentanspruchs 1. Vorteilhafte Ausgestaltungen ergeben sich aus den abhängigen Patentansprüchen, der Beschreibung, sowie aus den Figuren.

Zur Lösung der Aufgabe wird eine Anordnung zur Erdung einer aus einem Gehäuse hervorragenden Welle vorgeschlagen. Dazu ist eine Wellenerdungseinrichtung vorgesehen, welche zumindest ein Kontaktelement und zumindest ein Anbindungselement aufweist. Das zumindest eine Kontaktelement ist dazu eingerichtet einen elektrisch leitenden Schleifkontakt direkt zur Welle, oder zu einer auf die Welle aufgebrachten Hülse herzustellen. Das zumindest eine Kontaktelement kann beispielsweise durch Bürsten oder durch elektrisch leitfähige Elastomerelemente oder durch ein elektrisch leitfähiges Vlies gebildet sein. Die elektrisch leitfähigen Elastomerelemente können beispielsweise durch PTFE-Elemente gebildet sein, welche zumindest einen elektrisch leitfähigen Füllstoff aufweisen.

Das zumindest eine Kontaktelement ist mit dem zumindest einen Anbindungselement verbunden. Das zumindest eine Anbindungselement ist dazu eingerichtet einen mechanischen und/oder elektrisch leitfähigen Kontakt zu einer Außenfläche des Gehäuses herzustellen. Das zumindest eine Anbindungselement erstreckt sich in radialer Richtung außerhalb des zumindest einen Kontaktelements.

Erfindungsgemäß ist eine Dichtung vorgesehen, welche zwischen dem zumindest einen Anbindungselement und dem Gehäuse angeordnet ist. Die Dichtung schützt den Schleifkontakt der Wellenerdungseinrichtung vor Verunreinigungen, welche durch einen Spalt zwischen dem Anbindungselement und dem Gehäuse eindringen können.

Die Erfindung beruht auf der Erkenntnis, dass eine Abdeckung oder Abdichtung des Schleifkontakts durch ein axial neben den Kontaktelementen angeordnetes Schild oder Dichtung keinen vollständigen Schutz des Schleifkontakts bietet. Denn gelangt beispielsweise Feuchtigkeit von radial außen anstatt entlang der Welle zum Schleifkontakt, so kann dies zur Korrosion der Wellen- oder Hülsenoberfläche im Bereich des Schleifkontakts führen. Eine solche Korrosion kann zu einer erheblichen Verschlechterung der elektrischen Leitfähigkeit des Schleifkontakts führen. Eine wellenseitige Abdeckung oder Abdichtung des Schleifkontakts kann eine solche Korrosion sogar beschleunigen, da von radial außen eindringende Feuchtigkeit nicht ohne Weiteres aus dem Bereich des Schleifkontakts entweichen kann.

Die erfindungsgemäß vorgeschlagene Dichtung zwischen dem Anbindungselement und dem Gehäuse ermöglicht eine deutliche Verringerung des Korrosionsrisikos. Durch die Dichtung kann auf einfache und effiziente Weise ein Eindringen von Flüssigkeit oder anderen Verunreinigungen von radial außen zum Schleifkontakt vermieden werden.

Vorzugsweise ist die Dichtung als ein O-Ring oder als eine Flachdichtung ausgebildet.

Gemäß einer ersten möglichen Ausführungsform ist die Dichtung in einer Nut im Gehäuse angeordnet. Die Dichtung wird durch die Nut gehalten, und kann vor der Montage der Wellenerdungseinrichtung am Gehäuse montiert werden. Diese Ausführungsform ermöglicht daher einen einfachen Montageprozess.

Gemäß einer zweiten möglichen Ausführungsform ist die Dichtung in einer Nut im Gehäuse angeordnet. Eine solche Ausführung ist beispielsweise dann vorteilhaft, wenn das Anbindungselement durch ein Blech gebildet wird. In einer Blechkonstruktion kann auf einfache Weise eine Nut vorgesehen werden. Die Dichtung wird durch die Nut gehalten. Bei der Montage der Wellenerdungseinrichtung am Gehäuse wird die Dichtung mit montiert. Diese Ausführungsform ermöglicht daher einen einfachen Montageprozess.

Gemäß einer dritten möglichen Ausführungsform ist die Dichtung auf das zumindest eine Anbindungselement geklebt, aufvulkanisiert oder durch ein Dispens-Verfahren aufgetragen und anschließend ausgehärtet. Bei einer solchen Lösung ist ein Verlieren der Dichtung während des Montageprozesses weitgehend ausgeschlossen. Diese Ausführungsform ermöglicht daher einen einfachen und sicheren Montageprozess.

Gemäß einer vierten möglichen Ausführungsform ist die Dichtung auf das Anbindungselement aufgepresst. Beispielsweise kann die Dichtung das Anbindungselement umgreifen, wobei in der Dichtung ein Schlitz zur Aufnahme des Anbindungselements gebildet ist. Bei einer derartigen Lösung kann die Dichtung für die Zentrierung der Wellenerdungseinrichtung im Gehäuse sorgen. Zur Vereinfachung der Montage ist es vorteilhaft, eine derartige Dichtung aus mehreren, voneinander getrennten Dichtungs-Segmenten zu fertigen.

Gemäß einer weiteren möglichen Ausführung ist die Dichtung ringförmig ausgebildet, und weist mehrere radial nach außen vorstehende Abschnitte auf. An den radial nach außen vorstehenden Abschnitten ist ein in axialer Richtung ausgerichteter Fortsatz ausgebildet. Mittels der Fortsätze kann die Dichtung auf dem Anbindungselement gehalten werden.

Die vorgeschlagene Erdungs-Anordnung kann Bestandteil eines Getriebes für ein Kraftfahrzeug sein, beispielsweise ein Automatikgetriebe oder ein automatisiertes Getriebe. Die entsprechend geerdete Welle des Getriebes ist in einem Gehäuse des Getriebes drehbar gelagert, wobei ein Abschnitt der Welle aus dem Gehäuse hervorsteht. An dieser hervorstehende Welle kann eine weitere Welle angeschlossen Welle, beispielsweise eine Kardanwelle zu einem Differentialgetriebe oder eine Seitenwelle zu einem Antriebsrad des Kraftfahrzeugs. Der aus dem Gehäuse hervorstehende Wellenabschnitt kann Umwelteinflüssen wie Sand und Feuchtigkeit ausgesetzt sein. Das Getriebe kann eine elektrische Maschine aufweisen, welche zum Antrieb der Welle eingerichtet ist.

Die vorgeschlagene Erdungs-Anordnung kann Bestandteil einer elektrischen Achsantriebs-Einheit für ein Kraftahrzeug sein. Die entsprechend geerdete Welle der elektrischen Achsantriebs-Einheit ist in einem Gehäuse der elektrischen Achsantriebs-Einheit drehbar gelagert, wobei ein Abschnitt der Welle aus dem Gehäuse hervorsteht. An dieser hervorstehende Welle kann eine weitere Welle angeschlossen Welle, beispielsweise eine Kardanwelle zu einem Differentialgetriebe oder eine Seitenwelle zu einem Antriebsrad des Kraftfahrzeugs. Der aus dem Gehäuse hervorstehende Wellenabschnitt kann Umwelteinflüssen wie Sand und Feuchtigkeit ausgesetzt sein.

Die vorgeschlagene Erdungs-Anordnung kann Bestandteil einer elektrischen Maschine mit einem drehfesten Stator und einem drehbar gelagerten Rotor sein. Der Rotor ist mit einer Rotorwelle gekoppelt. Die Rotorwelle ist durch die vorgeschlagene Anordnung gegenüber einem Gehäuse der elektrischen Maschine geerdet. Ein Abschnitt der Rotorwelle steht aus dem Gehäuse hervor. An dieser hervorstehende Welle kann eine weitere Welle angeschlossen werden, welche von der Rotorwelle angetrieben wird. Der aus dem Gehäuse hervorstehende Rotorwellenabschnitt kann Umwelteinflüssen wie Sand und Feuchtigkeit ausgesetzt sein.

Ausführungsbeispiele der Erfindung sind anhand der Figuren detailliert beschrieben. Es zeigen:
Fig. 1 und Fig. 2 je einen Antriebsstrang eines Kraftfahrzeugs;
Fig. 3 eine elektrische Maschine;
Fig. 4 bis Fig. 7 je eine Ansicht einer aus einem Gehäuse hervorragenden Welle;
Fig. 8 eine isometrische Ansicht eines Getriebes für ein Kraftfahrzeug.
Fig. 9 zeigt eine Detail-Schnittansicht des Getriebes; und
Fig. 10 eine Ansicht einer Dichtung.

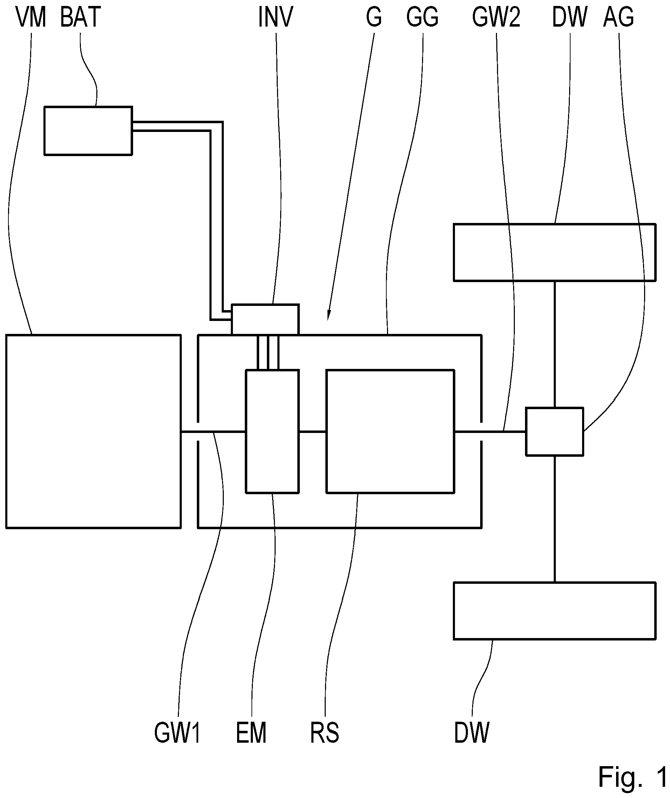

Fig. 1 zeigt schematisch einen Antriebsstrang für ein Kraftfahrzeug. Der Antriebsstrang weist einen Verbrennungsmotor VM auf, dessen Ausgang mit einer Eingangswelle GW1 eines Getriebes G verbunden ist. Eine Abtriebswelle GW2 des Getriebes G ist mit einem Differentialgetriebe AG verbunden. Das Differentialgetriebe AG ist dazu eingerichtet, die an der Abtriebswelle GW2 anliegende Leistung auf Antriebsräder DW des Kraftfahrzeugs zu verteilen. Das Getriebe G weist einen Radsatz RS auf, welcher zusammen mit in Fig. 1 nicht dargestellten Schaltelementen dazu eingerichtet ist verschiedene Übersetzungsverhältnisse zwischen der Eingangswelle GW1 und der Abtriebswelle GW2 bereitzustellen. Der Radsatz RS ist von einem Gehäuse GG umschlossen, welches auch eine mit der Eingangswelle GW1 verbundene elektrische Maschine EM beherbergt. Die elektrische Maschine EM ist dazu eingerichtet die Eingangswelle GW1 anzutreiben. Am Gehäuse GG ist ein Umrichter INV befestigt. Der Umrichter INV ist einerseits mit der elektrischen Maschine EM und andererseits mit einer Batterie BAT verbunden. Der Umrichter INV dient zur Wandlung des Gleichstroms der Batterie BAT in einen zum Betrieb der elektrischen Maschine EM geeigneten Wechselstrom, und weist dazu mehrere Leistungshalbleiter auf. Die Wandlung zwischen Gleichstrom und Wechselstrom erfolgt durch einen gesteuerten pulsartigen Betrieb der Leistungshalbleiter.

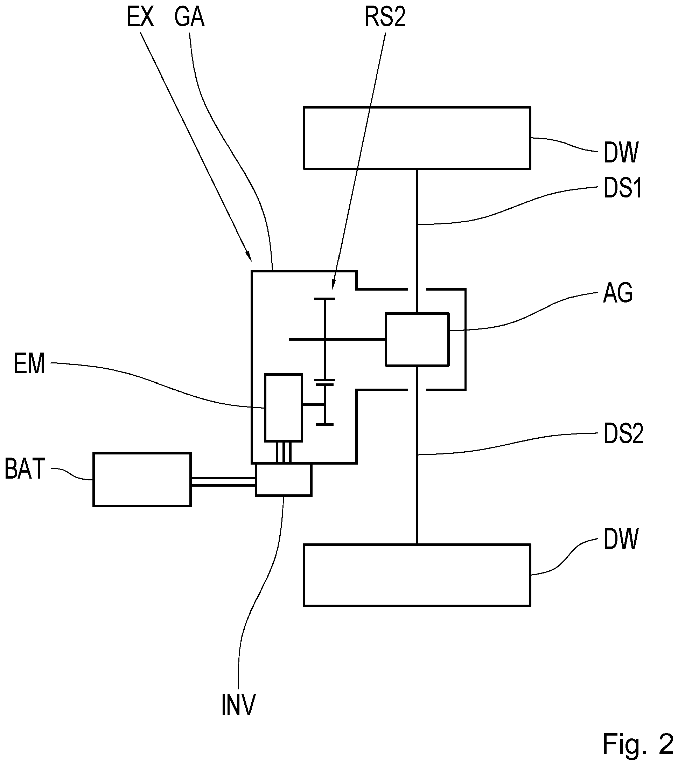

Fig. 2 zeigt schematisch einen Antriebsstrang für ein Kraftfahrzeug, welcher im Gegensatz zur in Fig. 1 dargestellten Ausführung ein rein elektrischer Antriebsstrang ist. Der Antriebsstrang weist eine elektrische Achsantriebs-Einheit EX auf. Die elektrische Achsantriebs-Einheit EX umfasst eine elektrische Maschine EM, deren Leistung über einen Reduktionsradsatz RS2 und ein Differentialgetriebe AG auf Antriebsräder DW eines Kraftfahrzeugs übertragen werden. Ausgangswellen DS1, DS2 des Differentialgetriebes AG sind mit den Antriebsrädern DW verbunden. Die elektrische Maschine EM, der Reduktionsradsatz RS2 und das Differentialgetriebe AG sind von einem Gehäuse GA umschlossen. Am Gehäuse GA ist ein Umrichter INV befestigt. Der Umrichter INV ist einerseits mit der elektrischen Maschine EM und andererseits mit einer Batterie BAT verbunden. Der Umrichter INV dient zur Wandlung des Gleichstroms der Batterie BAT in einen zum Betrieb der elektrischen Maschine EM geeigneten Wechselstrom, und weist dazu mehrere Leistungshalbleiter auf. Die Wandlung zwischen Gleichstrom und Wechselstrom erfolgt durch einen gesteuerten pulsartigen Betrieb der Leistungshalbleiter.

Die in Fig. 1 und Fig. 2 dargestellten Antriebsstränge sind nur beispielhaft anzusehen.

Durch den pulsartigen Betrieb der Leistungshalbleiter können elektromagnetische Störsignale entstehen, die beispielsweise im Antriebsstrang gemäß Fig. 1 in die Abtriebswelle GW2 oder im Antriebsstrang gemäß Fig. 2 in die Ausgangswellen DS1, DS2 eingekoppelt werden. Durch die in Fig. 1 und Fig. 2 nicht dargestellte Lagerung der Abtriebswelle GW2, bzw. der Ausgangswellen DS1, DS2 sind diese jedoch gegenüber dem Gehäuse GG, bzw. dem Gehäuse GA elektrisch isoliert, da das Schmieröl im Inneren der Gehäuse GG, GA elektrisch isolierende Eigenschaften aufweist. Somit können in die Abtriebswelle GW2, bzw. in die Ausgangswellen DS1, DS2 eingekoppelte Störsignale nicht auf kurzem Weg in das Gehäuse GG, bzw. Gehäuse GA fließen, welches mit einer elektrischen Masse des Kraftfahrzeugs verbunden ist. Stattdessen gelangen die Störsignale durch elektromagnetische Abstrahlung zurück zur elektrischen Masse, wodurch andere elektronische Komponenten des Kraftfahrzeugs gestört werden können. Die aus dem Gehäuse GG, bzw. Gehäuse GA hervortretende Abtriebswelle GW2, bzw. Ausgangswellen DS1, DS2 können dabei eine Antenne bilden, welche die elektromagnetische Abstrahlung der Störsignale begünstigt.

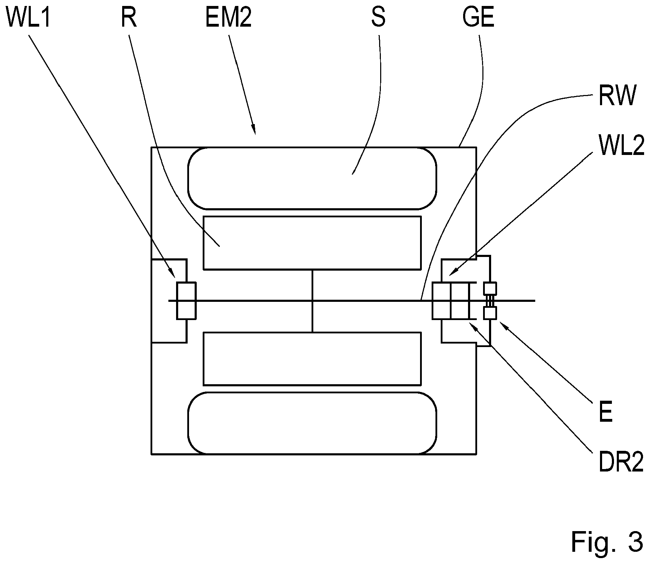

Fig. 3 zeigt eine schematische Ansicht einer elektrischen Maschine EM2. Die elektrische Maschine EM2 weist ein Gehäuse GE auf, welches einen Stator S und einen Rotor R aufnimmt. Der Stator S ist drehfest im Gehäuse GE fixiert. Der Rotor R ist mit einer Rotorwelle RW gekoppelt, wobei die Rotorwelle RW über zwei Wälzlager WL1, WL2 drehbar gelagert ist. Ein Ende der Rotorwelle RW ragt aus dem Gehäuse GE hervor. An einem freiliegenden Abschnitt der Rotorwelle RW ist eine Wellenerdungseinrichtung E vorgesehen. Zwischen dem Wälzlager WL2 und der Wellenerdungseinrichtung ist ein Dichtring DR2 vorgesehen. Die Wellenerdungseinrichtung E stellt einen elektrisch leitfähigen Kontakt zwischen dem Gehäuse GE und der Rotorwelle RW her. Die Wellenerdungseinrichtung E weist dazu Bürsten oder andere elektrisch leitfähige Kontaktelemente auf, welche auf einer Oberfläche der Rotorwelle RW schleifen. Über die Wellenerdungseinrichtung E kann ein Potentialunterschied zwischen Gehäuse GE und der Rotorwelle E abgebaut werden. Die Wälzlager WL1, WL2 werden dadurch vor einem unkontrollierten Potentialausgleich über die Wälzkörper der Wälzlager WL1, WL2 geschützt.

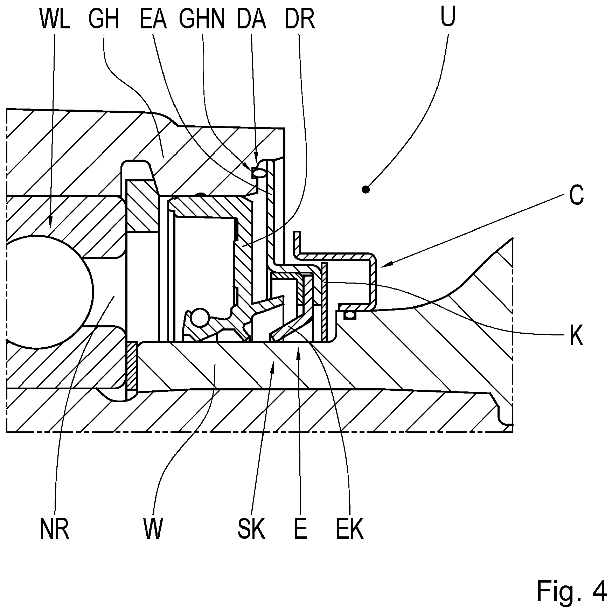

Fig. 4 zeigt eine Detail-Schnittansicht einer aus einem Gehäuse GH hervorragenden Welle W. Die in Fig. 4 dargestellte Welle W könnte beispielsweise die Abtriebswelle GW2 gemäß Fig. 1, oder eine der Ausgangswellen DS1, DS2 gemäß Fig. 2, oder die Rotorwelle RW gemäß Fig. 3 sein. Das Gehäuse GH könnte beispielsweise das Gehäuse GG gemäß Fig. 1, das Gehäuse GA gemäß Fig. 2 oder das Gehäuse GE gemäß Fig. 3 sein. Die Welle W ist mehrteilig aufgebaut, und ist über ein Kugellager WL am Gehäuse GH gelagert. Das Kugellager WL befindet sich in einem Ölraum NR. Zur Abdichtung des Ölraums NR gegenüber einer Umgebung U ist ein Radialwellendichtring DR mit einer Dichtlippe vorgesehen, welche einen Schleifkontakt zur Welle W bildet. An der Umgebungsseite des Radialwellendichtrings DR ist eine Wellenerdungseinrichtung E vorgesehen. Die Wellenerdungseinrichtung E ist mit dem Gehäuse GH mechanisch und elektrisch leitfähig verbunden. Dazu ist ein Anbindungselement EA vorgesehen, über welches die Wellenerdungseinrichtung E mechanisch und elektrisch mit dem Gehäuse GH verbunden ist. Das Anbindungselemente EA ist in Fig. 4 nur abschnittsweise dargestellt. Kontaktelemente EK der Wellenerdungseinrichtung E bilden einen elektrisch leitfähigen Schleifkontakt SK zur Welle W. Die Kontaktelemente EK können beispielsweise Bürsten oder elektrisch leitfähige PTFE-Elemente oder ein elektrisch leitfähiges Vlies sein.

Um den Schleifkontakt SK vor Umwelteinflüssen zu schützen ist ein Abdeckelement C vorgesehen, welches drehfest mit der Welle W verbunden ist. Zwischen dem sich drehenden Abdeckelement C und der drehfest angeordneten Wellenerdungseinrichtung E ist ein radialer Spalt vorgesehen, sodass eine Labyrinthdichtung gebildet wird. Zusätzlich ist eine mit der Wellenerdungseinrichtung E verbundene Abdeckkappe K vorgesehen, um den Schleifkontakt SK vor wellenseitig eindringen Verunreinigungen zu schützen.

Um den Schleifkontakt SK auch vor Verunreinigungen zu schützen, welche von radial außerhalb in Richtung des Schleifkontakts SK gelangen können, ist zwischen dem Anbindungselement EA und dem Gehäuse GH eine Dichtung DA vorgesehen. Die Dichtung DA ist im Ausführungsbeispiel gemäß Fig. 4 als O-Ring ausgebildet, welcher in einer Nut GHN im Gehäuse GH angeordnet ist. Die Dichtung DA wird vor Montage der Wellenerdungseinrichtung E in die Nut GHN eingelegt.

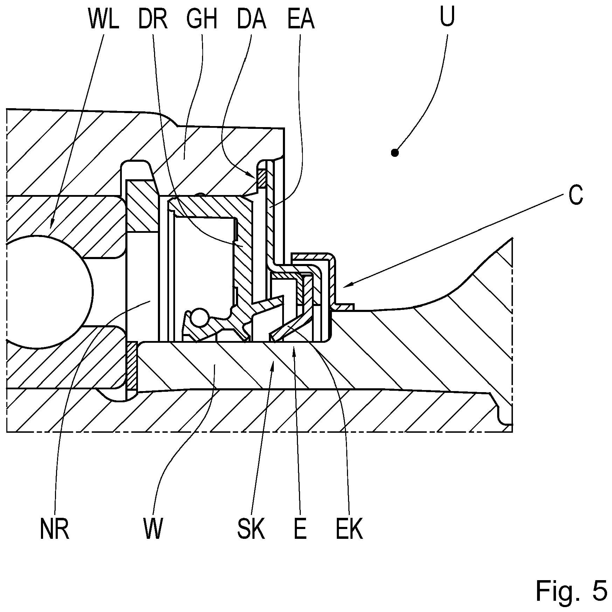

Fig. 5 zeigt eine Detail-Schnittansicht einer aus einem Gehäuse GH hervorragenden Welle W, welche im Wesentlichen der Darstellung gemäß Fig. 4 entspricht. Die Nut im Gehäuse GH zur Aufnahme der Dichtung DA entfällt darin; stattdessen ist die Dichtung DA als Flachdichtung DA ausgeführt und auf das Anbindungselement EA geklebt oder aufvulkanisiert.

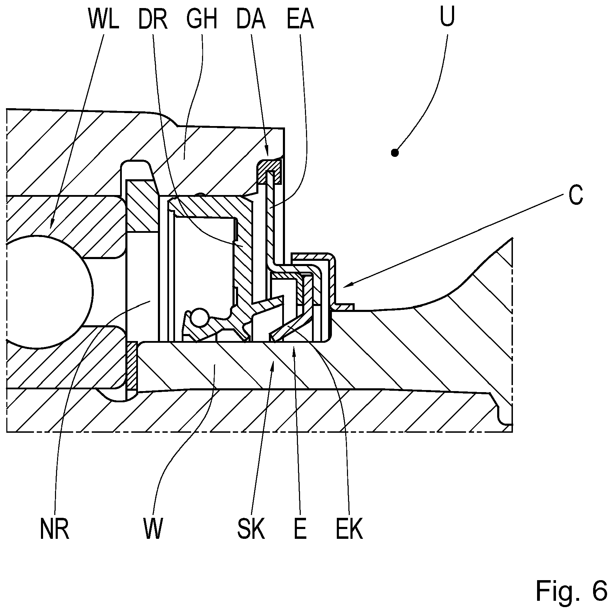

Fig. 6 zeigt eine Detail-Schnittansicht einer aus einem Gehäuse GH hervorragenden Welle W, welche im Wesentlichen der Darstellung gemäß Fig. 4 entspricht. Die Nut im Gehäuse GH zur Aufnahme der Dichtung DA entfällt darin; stattdessen ist die Dichtung DA auf einen Abschnitt des Anbindungselements EA aufgepresst. Durch eine derartige Anordnung wird die Wellenerdungseinrichtung E mittels der Dichtung DA im Gehäuse GH zentriert.

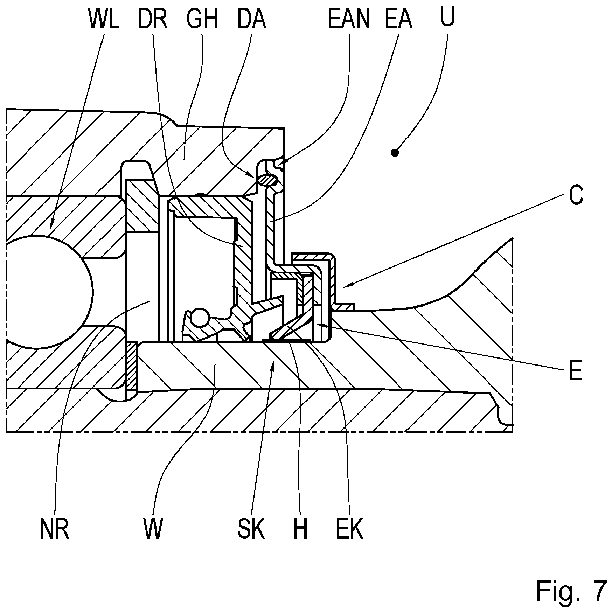

Fig. 7 zeigt eine Detail-Schnittansicht einer aus einem Gehäuse GH hervorragenden Welle W, welche im Wesentlichen der Darstellung gemäß Fig. 4 entspricht. Die Nut im Gehäuse GH zur Aufnahme der Dichtung DA entfällt darin; stattdessen ist nun eine Nut EAN im Anbindungselement EA zur Aufnahme der Dichtung DA vorgesehen. Die Dichtung DA ist nun als O-Ring ausgeführt, welcher vor Montage der Wellenerdungseinrichtung E am Gehäuse GH in die Nut EAN eingelegt wird. Zudem besteht der Schleifkontakt SK nun nicht mehr zwischen den Kontaktelementen EK und der Welle W, sondern zwischen den Kontaktelementen EK und einer Hülse H, welche auf die Welle W aufgebracht ist. Die Hülse H kann beispielsweise eine Edelstahlhülse sein.

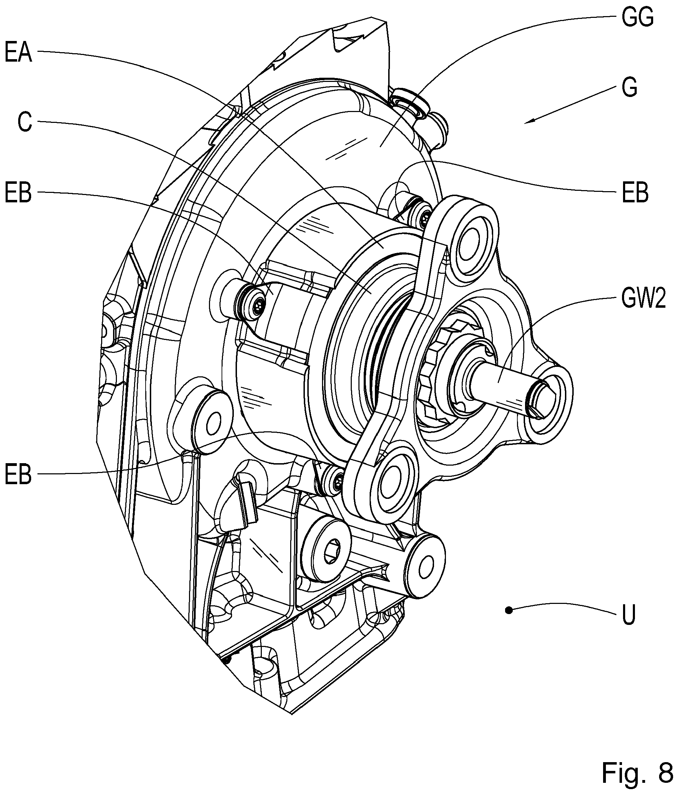

Fig. 8 zeigt eine isometrische Ansicht einer Abtriebsseite eines Getriebes G für ein Kraftfahrzeug. Darin ist gut erkennbar, dass die Welle W aus dem Gehäuse GG hervorragt. Die Wellenerdungseinrichtung E ist mechanisch und elektrisch über das Anbindungselement EA am Gehäuse GG des Getriebes G befestigt, und zwar über mehrere Befestigungslaschen EB des Anbindungselements EA. Das Abdeckelement C umschließt einen Teil der Wellenerdungseinrichtung E, um den in Fig. 8 nicht sichtbaren Schleifkontakt SK vor Umwelteinflüssen zu schützen.

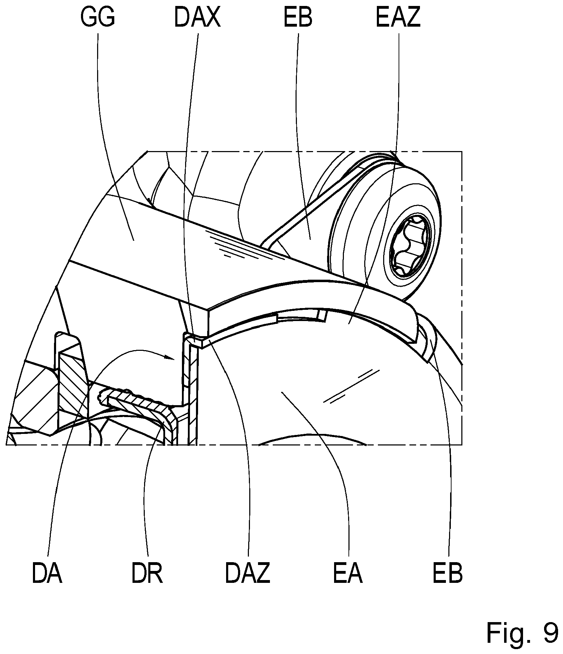

Fig. 9 zeigt eine Detail-Schnittansicht des Getriebes G, in welcher eine Ausgestaltung der Dichtung DA zwischen dem Anbindungselement EA und dem Gehäuse GG dargestellt ist. Die Dichtung DA weist mehrere radial nach außen gerichtete Vorsprünge DAX auf, von denen in Fig. 9 nur ein einziger zu sehen ist. An den radial vorstehenden Vorsprüngen DX ist ein in axialer Richtung ausgerichteter Fortsatz DAZ ausgebildet. Die Fortsätze DAZ umgreifen einen Abschnitt des Anbindungselements EA. Die Zentrierung der Wellenerdungseinrichtung E erfolgt durch radial nach außen gerichtete Fortsätze EAZ des Anbindungselements EA.

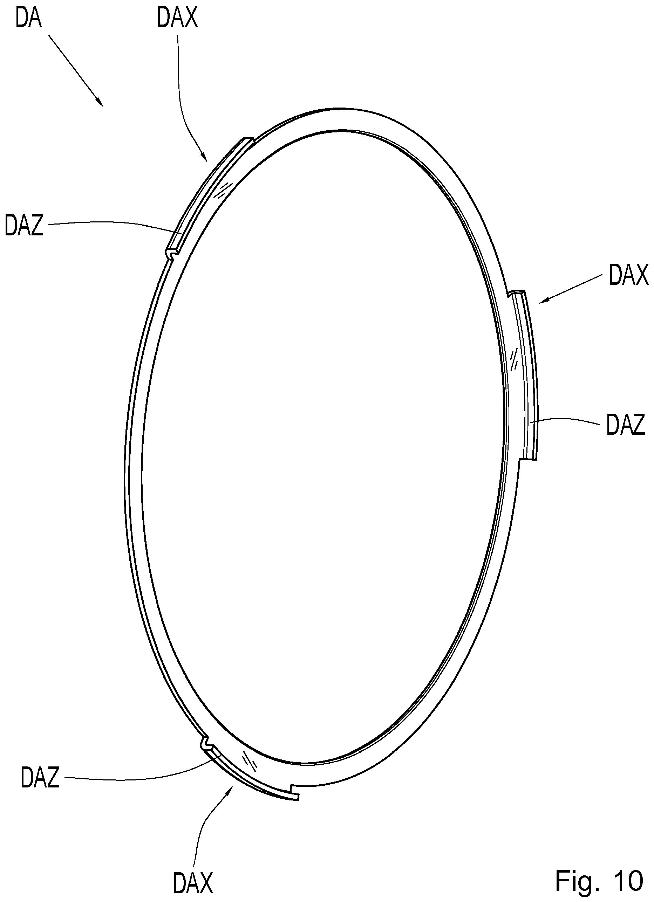

Fig. 10 zeigt eine Ansicht der Dichtung DA gemäß der in Fig. 9 dargestellten Ausführung. In Fig. 10 ist gut erkennbar, dass die Dichtung DA ringförmig ausgebildet ist, und dass die Dichtung DA drei radial nach außen gerichteten Vorsprünge DAX und daran angeordnete axiale Fortsätze DAZ aufweist.

### Bezugszeichen

- VM: Verbrennungsmotor
- EX: Elektrische Achsantriebs-Einheit
- G: Getriebe
- GW1: Eingangswelle
- GW2: Abtriebswelle
- RS: Radsatz
- RS2: Reduktionsradsatz
- EM: Elektrische Maschine
- INV: Umrichter
- BAT: Batterie
- AG: Differentialgetriebe
- DS1: Ausgangswelle
- DS2: Ausgangswelle
- DW: Antriebsrad
- GA: Gehäuse
- EM2: Elektrische Maschine
- S: Stator
- R: Rotor
- RW: Rotorwelle
- WL1: Lager
- WL2: Lager
- DR2: Dichtring
- GE: Gehäuse
- W: Welle
- H: Hülse
- GH: Gehäuse
- GHN: Nut
- WL: Lager
- DR: Radialwellendichtring
- NR: Ölraum
- E: Wellenerdungseinrichtung
- EK: Kontaktelement
- SK: Schleifkontakt
- EA: Anbindungselement
- EAZ: Fortsatz des Anbindungselements
- EAN: Nut
- EB: Befestigungslasche
- DA: Dichtung
- DAZ: Abschnitt der Dichtung
- DAZ: Fortsatz der Dichtung
- U: Umgebung

## Patentansprüche

1. Anordnung zur Erdung einer aus einem Gehäuse (GH) hervorragenden Welle (W), wobei zur Erdung der Welle (W) gegenüber dem Gehäuse (GH) eine Wellenerdungseinrichtung (E) mit zumindest einem Kontaktelement (EK) und zumindest einem Anbindungselement (EA) vorgesehen ist,
- wobei das zumindest eine Kontaktelement (EK) dazu eingerichtet ist einen elektrisch leitfähigen Schleifkontakt (SK) zur Welle (W) oder zu einer auf die Welle (W) aufgebrachten Hülse (H) herzustellen, wobei das zumindest eine Kontaktelement (EK) mit dem zumindest einen Anbindungselement (EA) verbunden ist,
- wobei das zumindest eine Anbindungselement (EA) dazu eingerichtet ist einen mechanischen und/oder elektrisch leitfähigen Kontakt zu einer Außenfläche des Gehäuses (GH) herzustellen, wobei sich das zumindest eine Anbindungselement (EA) in radialer Richtung außerhalb des zumindest einen Kontaktelements (EK) erstreckt,
**dadurch gekennzeichnet, dass** eine Dichtung (DA) zwischen dem zumindest einen Anbindungselement (EA) und dem Gehäuse (GH) vorgesehen ist, um den Schleifkontakt (SK) vor durch einen Spalt zwischen dem zumindest einen Anbindungselement (EA) und dem Gehäuse (GH) eindringenden Verunreinigungen zu schützen.

2. Anordnung nach Anspruch 1, **dadurch gekennzeichnet, dass** die Dichtung (DA) durch einen O-Ring oder durch eine Flachdichtung gebildet ist.

3. Anordnung nach Anspruch 1 oder Anspruch 2, **dadurch gekennzeichnet, dass** die Dichtung (DA) in einer Nut (GHN) im Gehäuse (GH) angeordnet ist.

4. Anordnung nach Anspruch 1 oder Anspruch 2, **dadurch gekennzeichnet, dass** die Dichtung (DA) in einer Nut (EAN) in dem zumindest einen Anbindungselement (EA) angeordnet ist.

5. Anordnung nach Anspruch 1 oder Anspruch 2, **dadurch gekennzeichnet, dass** die Dichtung (DA) auf das zumindest eine Anbindungselement (EA) geklebt, aufvulkanisiert oder durch ein Dispens-Verfahren aufgetragen ist.

6. Anordnung nach Anspruch 1 **dadurch gekennzeichnet, dass** die Dichtung (DA) auf einen Abschnitt des zumindest einen Anbindungselement (EA) aufgepresst ist.

7. Anordnung nach Anspruch 6, **dadurch gekennzeichnet, dass** die Wellenerdungseinrichtung (E) mittels der Dichtung (DA) im Gehäuse (GH) zentriert ist.

8. Anordnung nach Anspruch 6 oder Anspruch 7, **dadurch gekennzeichnet, dass** die Dichtung (DA) aus mehreren voneinander getrennten Dichtungs-Segmenten besteht.

9. Anordnung nach einem der Ansprüche 1, 6 oder 7, **dadurch gekennzeichnet, dass** die Dichtung (DA) ringförmig ist und mehrere radial nach außen vorstehende Abschnitte (DAX) aufweist, wobei an den radial vorstehenden Abschnitten (DAX) ein in axialer Richtung ausgerichteter Fortsatz (DAZ) ausgebildet.

10. Getriebe (G) für ein Kraftfahrzeug, **gekennzeichnet durch** eine Anordnung zur Erdung einer aus einem Gehäuse (GG) des Getriebes (G) hervorragenden Welle (GW2) nach einem der Ansprüche 1 bis 9.

11. Getriebe (G) nach Anspruch 10, **dadurch gekennzeichnet, dass** die Welle (GW2) eine Abtriebswelle des Getriebes (G) bildet.

12. Getriebe (G) nach Anspruch 10 oder Anspruch 11, **dadurch gekennzeichnet, dass** das Getriebe (G) eine elektrische Maschine (EM) aufweist, welche zum Antrieb der Welle (GW2) eingerichtet ist.

13. Elektrische Achsantriebs-Einheit (EX) für ein Kraftfahrzeug, **gekennzeichnet durch** eine Anordnung zur Erdung einer aus einem Gehäuse (GA) der Achsantriebs-Einheit (EX) hervorragenden Welle (DS1, DS2) nach einem der Ansprüche 1 bis 9.

14. Elektrische Maschine (EM2) mit einem drehfesten Stator (S) und einem drehbaren Rotor (R), wobei der Rotor (R) mit einer Rotorwelle (RW) gekoppelt ist, wobei ein Ende der Rotorwelle (RW) aus einem Gehäuse (GE) der elektrischen Maschine (EM2) hervorragt, **gekennzeichnet durch** eine Anordnung zur Erdung der Rotorwelle (RW) nach einem der Ansprüche 1 bis 9.
